# EUROPÄISCHE PATENTANMELDUNG

(11) **EP 0 819 509 A2**
(43) Veröffentlichungstag der Anmeldung: **21.01.1998**
(21) Anmeldenummer: 97112342.7
(22) Anmeldetag: 18.07.1997
(51) Int. Cl.: B29B 13/02, B05C 5/04

(54) **Vorrichtung zum Fördern einer pastösen Substanz aus einem Fass in ein Leitungssystem**

(30) Priorität: 18.07.1996 DE 29612462 U
(71) Anmelder: Lenhardt Maschinenbau GmbH, D-75242 Neuhausen-Hamberg (DE)
(72) Erfinder: Lenhardt, Karl, 75242 Neuhausen-Hamberg (DE)
(74) Vertreter: Twelmeier, Ulrich, Dipl.Phys.

(57) **Zusammenfassung**

Vorrichtung zum Fördern einer pastösen Substanz, insbesondere einer Klebemasse zur Verwendung in der Isolierglasfertigung, aus einem Faß (25) in eine Leitung, mit einem Gestell (1) zum Aufnehmen des Fasses (25), mit einer zum Eintauchen in das Faß (25) bestimmten Platte (13), welche durch das Gestell (1) auf und ab verschieblich gehalten, hinsichtlich ihres Umfangs an die Weite des Fasses angepaßt ist, an ihrer Unterseite eine Ausnehmung (16) und an der am weitesten oben liegenden Stelle der Ausnehmung (16) eine Öffnung (17) hat, durch welche die pastöse Substanz in die Leitung eintreten kann. Die Ausnehmung (16) der Platte (13) ist durch einen Löcher (20, 21, 22) aufweisenden Boden (18) abgedeckt.

## Beschreibung

Die Erfindung geht aus von einer Vorrichtung mit den im Oberbegriff des Anspruchs 1 angegebenen Merkmalen. Eine solche Vorrichtung ist aus der EP 0 171 309 B2 bekannt. Bei der bekannten Vorrichtung handelt es sich um eine Faßpumpe, mit welcher ein pastöser Kunststoff auf Butylkautschukbasis aus einem Faß in ein Leitungssystem gefordert wird, welche an einer Düse endet, mit welcher der Kunststoff auf eine Glastafel aufgetragen wird, um einen plastischen Abstandhalter für Isolierglas zu bilden. Die Vorrichtung hat ein Gestell, auf welches das leerzupumpende Faß gestellt wird. Am Gestell ist eine kreisrunde Platte aufgehängt, welche nach dem Öffnen des Fasses auf den zu pumpenden Kunststoff gelegt wird. Um die Pumpbarkeit des Kunststoffes zu verbessern, wird die Platte beheizt. Die Wärme wird durch die Unterseite der Platte in den Kunststoff eingeleitet, wobei dieses durch Rippen oder dergleichen in den Kunststoff eintauchende Vorsprünge an der Unterseite der Platte begünstigt wird. Durch die Beheizung wird die Zähigkeit des thermoplastischen Butylkautschuks herabgesetzt und seine Fließfähigkeit erhöht. Durch eine oberhalb der Platte angeordnete Pumpe kann er leichter angesaugt und in das zur Düse führende Leitungssystem gefördert werden. Zu diesem Zweck befindet sich an der Unterseite der Platte eine sich konisch nach oben verengende Ausnehmung, an deren am weitesten oben liegender Stelle eine Öffnung vorgesehen ist, durch welche der erwärmte Butylkautschuk in das Leitungssystem eintritt. Die Platte folgt dem sinkenden Spiegel des Kunststoffs im Faß und wird deshalb auch als Folgeplatte bezeichnet. Sie kann den Pumpvorgang unterstützen, indem sie durch hydraulische Zylinder beaufschlagt wird, welche einen Bestandteil des Gestells bilden, welches das Faß aufnimmt. Wenn die Folgeplatte am Boden des Fasses angekommen ist, ist ein Faßwechsel fällig. Dazu wird die Folgeplatte von den hydraulischen Zylindern des Gestells aus dem Faß herausgehoben, woraufhin das Faß aus dem Gestell entfernt werden kann. Eine dem Rauminhalt der Ausnehmung an der Unterseite der Folgeplatte entsprechende Menge des Kunststoffs bleibt im Faß zurück, typisch 3 % bis 5 % des Faßinhaltes, das sind bei der in der Isolierglasfertigung üblichen Faßgröße von 200 l 6 l bis 10 l des Butylkautschuks im Wert von größenordnungsmäßig DM 100,--. Dieser im Faß verbleibende Rest wird zusammen mit dem entleerten Faß an den Klebstoffhersteller zurückgegeben, der den Klebstoff aus dem Faß mühsam entfernt und entsorgt.

Der vorliegenden Erfindung liegt die **Aufgabe** zugrunde, einen Weg aufzuzeigen, wie jene Kosten gesenkt werden können, die sich aus dem nicht aus dem Faß pumpbaren Rest des Faßinhaltes ergeben.

Diese Aufgabe wird gelöst durch eine Vorrichtung mit den im Anspruch 1 angegebenen Merkmalen. Vorteilhafte Weiterbildunden der Erfindung sind Gegenstand der abhängigen Ansprüche.

Die Erfindung löst die Aufgabe auf überraschend einfache Weise dadurch, daß die Ausnehmung an der Unterseite der Folgeplatte durch einen Löcher aufweisenden Boden abgedeckt wird. Durch die Löcher des Bodens, deren zusammengenommener Öffnungsquerschnitt viel größer sein sollte als der Querschnitt der Öffnung, durch welche die pastöse Substanz an der am weitesten oben liegenden Stelle der Ausnehmung wieder austreten kann, kann die pastöse Substanz unter der Wirkung der oberhalb der Platte angeordneten Pumpe und/oder unter der Pumpwirkung der Platte selbst (welche sich wie der Kolben einer Kolbenpumpe im Faß abwärtsbewegt) ohne weiteres in die zwischen dem Boden und der Platte gebildete Ausnehmung eindringen, dort erwärmt werden und durch die obere Öffnung abfließen. Gelangt die Platte auf den Faßboden und wird anschließend hochgezogen, wird der in der Ausnehmung eingeschlossene, nicht pumpbare Rest der pastösen Substanz mit herausgehoben und verbleibt nicht im Faß. Das Faß kann deshalb so gut wie leer an den Lieferanten der pastösen Substanz zurückgegeben werden. Der in der Ausnehmung der Folgeplatte verbliebene Rest bedarf, was ein wesentlicher Vorteil der Erfindung ist, keiner Entsorgung. Die Folgeplatte wird vielmehr mit dem in der Ausnehmung verbliebenen Rest der pastösen Substanz in das nächste, volle Faß eingesetzt, und wenn dann der Pumpvorgang beginnt, wird zunächst der aus dem vorhergehenden Faß stammende Rest in das Leitungssystem gefördert, so daß nicht zu befürchten ist, daß die Substanz zwischenzeitlich durch Altern unbrauchbar wird. Die Erfindung spart (im Falle der Verarbeitung von Butylkautschuk) nicht nur rund DM 100,-- an Materialkosten beim Verarbeiter der Substanz ein, sondern spart auch darüberhinaus erhebliche Kosten beim Lieferanten ein, die dort sonst durch das Entfernen der Restmengen aus dem Faß und ihr anschließendes Entsorgen anfallen würden.

Vorzugsweise ist der Boden abnehmbar an der Folgeplatte angebracht, um die Ausnehmung von Zeit zu Zeit inspizieren und nach Bedarf reinigen zu können.

Der Boden kann zu diesem Zweck fest mit der Unterseite der Folgeplatte verschraubt sein. Eine vorteilhatte Alternative besteht darin, ihn mit einem in senkrechter Richtung wirksamen Spiel an der Unterseite der Platte anzubringen. Das hat die Wirkung, daß beim Herausziehen der Folgeplatte aus dem entleerten Faß der Löcher aufweisande Boden zunächst auf dem Boden des Fasses liegen bleibt, nämlich solange, bis sich die Folgeplatte um das Spiel, mit welchem der Boden an der Unterseite der Folgeplatte angebracht ist, nach oben bewegt hat. Dadurch wird die sich in den Löchern des Bodens befindliche Substanz in die Ausnehmung hineingesaugt und der Rest der Substanz, der auf dem Faßboden hatten bleibt, ist besonders gering. Sollte die Substanz dermaßen klebrig sein, daß trotz des vorgesehenen Spieles der Boden durch die Kleberhaftung von Beginn der Aushebebewegung der Folgeplatte an mit angehoben wird, als ob kein Spiel zwischen beiden vorhanden wäre, dann kann durch in der Folgeplatte geführte, auf den Boden einwirkende Stößel oder durch zwischen den beiden wirksame Druckfedern dafür gesorgt werden, daß das Spiel zwischen der Folgeplatte und ihrem Boden doch wirksam wird und bei der Heraushebebewegung der gelochte Boden zunächst auf dem Faßboden liegen bleibt, bis das Spiel zwischen dem gelochten Boden und der Folgeplatte überwunden ist.

In der Gestaltung des Bodens gibt es Gestaltungsspielraum. Einerseits sollte der Boden hinreichend starr sein, um den im Faß beim Pumpvorgang auftretenden Drücken widerstehen zu können. Andererseits sollte die Summe der Öffnungsquerschnitte der Löcher in der Platte möglichst groß sein, um dem Einfließen der pastösen Substanz in die Ausnehmung unter der Folgeplatte möglichst wenig Widerstand entgegenzusetzen. Das kann man einmal dadurch erreichen, daß man den Boden als Lochplatte ausbildet, über deren Fläche möglichst viele Löcher einigermaßen gleichmässig verteilt sind, wobei sich als Löcher sowohl zylindrische Bohrungen als auch ovale Löcher und Langlöcher eignen. Eine andere Möglichkeit besteht darin, den Boden als Rost auszubilden.

Um den im Faß zu verbleibenden Rest der Substanz zu minimieren, kann man den Boden der Ausnehmung mit Vorteil an den Faßboden anpassen, und zwar so, daß die Unterseite des Bodens der Ausnehmung ein Relief hat, welches dem Relief auf der Oberseite des Faßbodens angepaßt ist. Ist der Faßboden eben, dann bildet man die Folgeplatte samt ihrem Boden an der Unterseite eben aus; die ebene Ausbildung ist natürlich auch die einfachste der Möglichkeiten in allen übrigen Fällen.

Die Erfindung ist dort anwendbar, wo es darum geht, pastöse Substanzen, insbesondere Klebstoffe und Dichtstoffe aus einem Faß zu pumpen. Bevorzugte Anwendung ist das Pumpen von Dicht- und Klebstoffen, die in der Fertigung von Isolierglasscheiben zur Bildung von plastischen Abstandhaltern und zur Versiegelung der Randfuge von Isolierglasscheiben verwendet werden. Eine andere wesentliche Anwendung ist das Auftragen von Klebstoffen auf Karosserieteile im Automobilbau. Substanzen, welche nicht so zähflüssig sind, daß man sie mit Hilfe einer an der Unterseite ausgehöhlten Folgeplatte aufwärmen muß, um sie pumpbar zu machen oder ihre Pumpfähigkeit zu verbessern, sind für erfindungsgemäße Anwendungen weniger interessant.

Ein Ausführungsbeispiel der Erfindung ist in den beigefügten Zeichnungen dargestellt und wird nachfolgend beschrieben.
- Figur 1: zeigt eine erfindungsgemäße Vorrichtung in einer Seitenansicht mit vertikal geschnittenem Faß und vertikal geschnittener Folgeplatte,
- Figur 2: zeigt die Ansicht der Unterseite des an der Folgeplatte angebrachten Bodens,
- Figur 3: zeigt als Detail die Folgeplatte mit dem daran angebrachten Boden in einem Vertikalschnitt, und
- Figur 4: zeigt in einer Darstellung entsprechend Figur 1 eine Vorrichtung gemäß dem Stand der Technik.

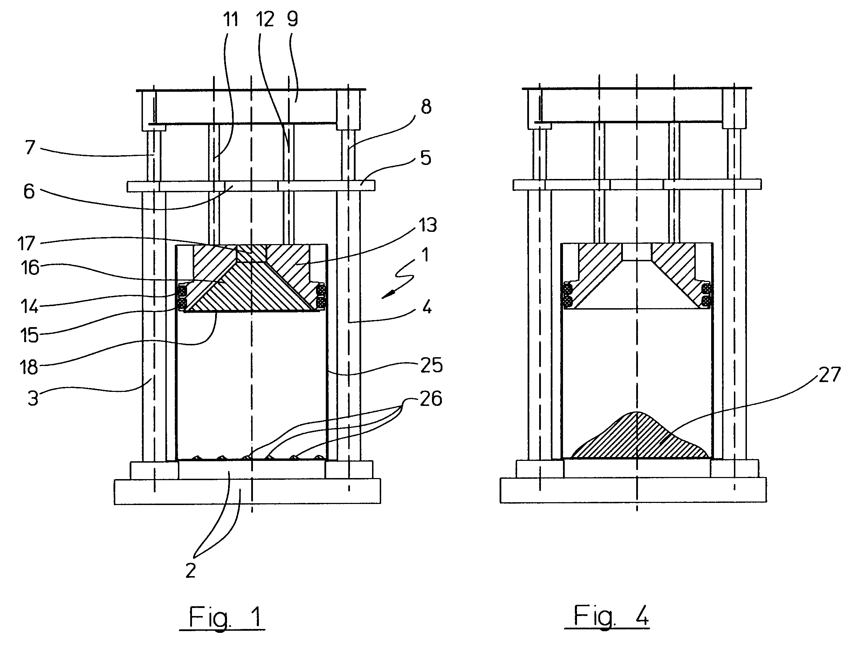

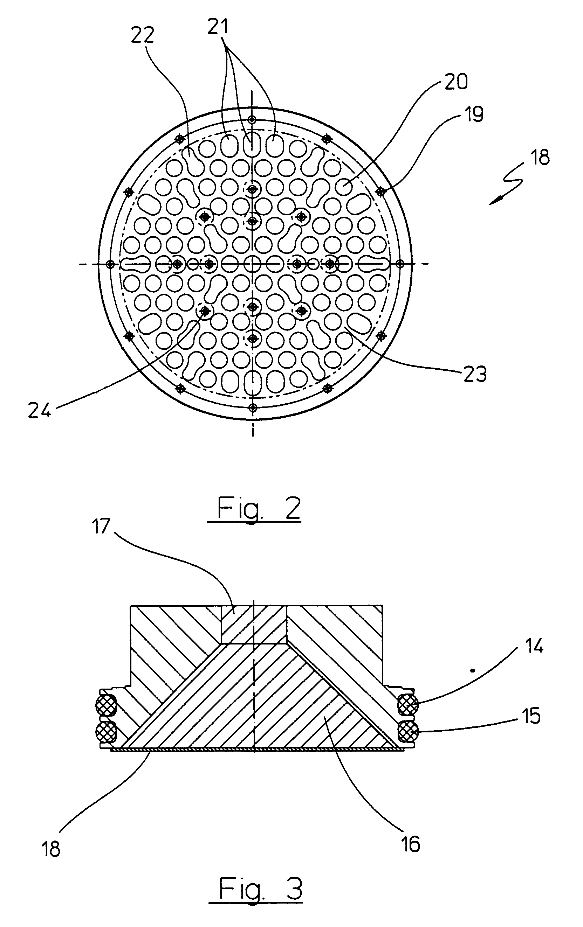

Die in den Figuren 1 bis 3 dargestellte Vorrichtung hat ein Gestell 1 mit einer Fußplatte 2, auf welcher zwei Hydraulikzylinder 3 und 4 aufrechtstehend verankert sind. Die Hydraulikzylinder 3 und 4 sind an ihrem oberen Ende durch eine waagerechte Traverse 5 miteinander verbunden, welche in der Mitte ein Loch 6 hat. Aus den Hydraulikzylindern 3 und 4 führen nach oben Kolbenstangen 7 und 8 heraus, welche durch eine zweite waagerechte Traverse 9 miteinander verbunden sind, an welcher mittels Zugstangen 11 und 12 eine Folgeplatte 3 aufgehängt ist, welche kreisrund ist und an ihrem Umfang zwei Dichtringe 14 und 15 hat, welche so ausgebildet sein können, wie es anhand der Figur 3 in der EP 0 171 309 B2 dargestellt und beschrieben wurde. An ihrer Unterseite hat die Folgeplatte 13 eine kegelstumpfförmige Ausnehmung 16, welche sich von unten nach oben verengt und an der höchsten Stelle der Ausnehmung 16 in eine Öffnung 17 der Folgeplatte übergeht. Ein ebener Boden 18 ist mittels Schrauben 19, 24 an der Unterseite der Folgeplatte 13 befestigt und schließt deren Ausnehmung 16 nach unten hin ab. Der ebene Boden weist eine große Anzahl von Löchern von unterschiedlicher Gestalt auf, darunter vorwiegend zylindrische Bohrungen 20, Langlöcher 21 und Löcher 22 von keulenförmigem Umriß. Die Löcher sind einigermaßen gleichmäßig über die Oberfläche des Bodens 18 verteilt und weisen deshalb unterschiedliche Gestalt auf, um in der Summe einen größeren Öffnungsquerschnitt zu erhalten, als das bei Vorsehen von ausschließlich zylindrischen Bohrungen 20 unter Berücksichtigung der zwischen den Löchern noch erforderlichen Breite von Stegen 23 erreichbar wäre. Von der Darstellung dieser Löcher wurde in den Figuren 1 und 3 aus Gründen der Übersichtlichkeit abgesehen. Die kegelige Umfangsfläche der Ausnehmung 16 kann entsprechend der Offenbarung in der EP 0 171 309 B2 beheizte Fortsätze haben, von deren Darstellung in Figur 1 und 3 abgesehen wurde.

Die Vorrichtung arbeitet folgendermaßen: Bei angehobener Folgeplatte 13 wird auf die Fußplatte 2 des Gestells 1 ein Faß 25 gestellt, welches die pastöse Substanz enthält, welche in ein zu einer Düse führendes Leitungssystem gefördert werden soll, welches an die Öffnung 17 anschließt, aus Rohren und/oder Druckschläuchen besteht und eine oder mehrere weiterer Pumpen und Zwischenspeicher enthalten kann. In das Faß 25, dessen Deckel abgenommen ist, wird die Folgeplatte 13 eingeführt, bis sie auf der zu fördernden pastösen Substanz liegt.

Der Fördervorgang erfolgt dadurch, daß die Folgeplatte 13 durch die Hydraulikzylinder 3 und 4 abwärts gezogen wird, am besten in Kombination mit einer im Leitungssystem vorgesehenen Pumpe, welche sich z.B. auf der Oberseite der Folgeplatte 13 befinden kann. Durch die von der Unterseite der Folgeplatte 13 und ihren ggfs. in die Ausnehmung 16 hineinragenden Fortsätze ausgehende Beheizung der pastösen Substanz verbessert deren Pumpbarkeit oder stellt die Pumpbarkeit überhaupt erst her.

Mit fortschreitender Entleerung des Fasses 25 wandert die Folgeplatte 13 im Faß 25 abwärts und erreicht schließlich dessen Boden. Nun ist es Zeit für einen Faßwechsel. Dazu wird die Folgeplatte 13 von den Hydraulikzylindern 3 und 4 aus dem Faß 25 herausgehoben. Der in der Ausnehmung 16 befindliche Rest der Substanz wird darin durch den Boden 18 zurückgehalten und auf diese Weise ebenfalls aus dem Faß 25 herausgehoben. Am Faßboden bleiben lediglich geringe Reste der Substanz haften, welche infolge der Haftung am Faßboden aus den Löchern 20 bis 22 des Bodens 18 herausgezogen werden. Am Boden des Fasses verbleiben lediglich kleine Tüpfelchen 26 von der pastösen Substanz, welche noch dadurch vermindert werden könnten, daß die Bodenplatte 18 nicht fest, sondern mit einem vertikalen Spiel, vorzugsweise in der Größenordnung der Dicke der Bodenplatte 18 selbst, mit dieser verbunden wird, so daß der Boden 18 beim Anheben der Folgeplatte 13 bis zur Überwindung des Spiels zwischen beiden zunächst am Boden des Fasses 25 haften bleibt und die in den Löchern 20 bis 22 des Bodens 18 befindliche pastöse Masse durch das Hochfahren der Folgeplatte 13 in die Ausnehmung 16 hineingesaugt wird.

Figur 4, in welcher entsprechende Teile gleich bezeichnet sind wie in Figur 1, zeigt zum Vergleich die Verhältnisse im Stand der Technik mit einer Folgeplatte 13, deren Ausnehmung 16 nicht durch einen gelochten Boden begrenzt ist. Wenn in diesem Fall zum Zwecke des Faßwechsels die Folgeplatte 13 von den Hydraulikzylindern 3 und 4 angehoben wird, verbleibt ein kegeliger Haufen 27 im Faß und geht für den Anwender verloren.

## Patentansprüche

1. Vorrichtung zum Fördern einer pastösen Substanz, insbesondere einer Klebemasse zur Verwendung in der Isolierglasfertigung, aus einem Faß (25) in eine Leitung,
mit einem Gestell (1) zum Aufnehmen des Fasses (25),
mit einer zum Eintauchen in das Faß (25) bestimmten Platte (13), welche durch das Gestell (1) auf und ab verschieblich gehalten, hinsichtlich ihres Umfangs an die Weite des Fasses angepaßt ist, an ihrer Unterseite eine Ausnehmung (16) und an der am weitesten oben liegenden Stelle der Ausnehmung (16) eine Öffnung (17) hat, durch welche die pastöse Substanz in die Leitung eintreten kann,
**dadurch gekennzeichnet,** daß die Ausnehmung (16) durch einen Löcher (20, 21, 22) aufweisenden Boden (18) abgedeckt ist.

2. Vorrichtung nach Anspruch 1, **dadurch gekennzeichnet**, daß der Boden (18) abnehmbar an der Platte (13) angebracht ist.

3. Vorrichtung nach Anspruch 1 oder 2, **dadurch gekennzeichnet,** daß der Boden (18) mit in senkrechter Richtung wirksamem Spiel an der Unterseite der Platte (13) angebracht ist.

4. Vorrichtung nach einem der vorstehenden Ansprüche, **dadurch gekennzeichnet,** daß der Boden (18) als Lochplatte ausgebildet ist.

5. Vorrichtung nach einem der Ansprüche 1 bis 3, **dadurch gekennzeichnet,** daß der Boden (18) als Rost ausgebildet ist.

6. Vorrichtung nach einem der vorstehenden Ansprüche, **dadurch gekennzeichnet,** daß der Boden (18) an seiner Unterseite ein Relief aufweist, welches dem Relief der Oberseite des Faßbodens angepaßt ist.

7. Vorrichtung nach einem der vorstehenden Ansprüche, **dadurch gekennzeichnet,** daß der Boden (18) eben ist.
